Europäisches Patentamt

(19) European Patent Office

Office européen des brevets

(11) Veröffentlichungsnummer: **0 034 312**
**B1**

(12) **EUROPÄISCHE PATENTSCHRIFT**

(45) Veröffentlichungstag der Patentschrift:
**16.01.85**

(51) Int. Cl.⁴: **F 16 L 37/28**

(21) Anmeldenummer: **81100845.7**

(22) Anmeldetag: **06.02.81**

(54) **Auch unter Druck kuppelbare Schnellverschlusskupplung.**

(30) Priorität: **14.02.80 DE 3005490**
**16.10.80 DE 3039072**

(43) Veröffentlichungstag der Anmeldung:
**26.08.81 Patentblatt 81/34**

(45) Bekanntmachung des Hinweises auf die Patenterteilung:
**16.01.85 Patentblatt 85/3**

(84) Benannte Vertragsstaaten:
**AT BE CH FR GB IT LU NL SE**

(56) Entgegenhaltungen:
**DE - A - 2 642 724**
**DE - A - 2 715 417**
**DE - B - 2 712 117**
**DE - B - 2 724 630**
**US - A - 3 500 859**
**US - A - 3 674 051**
**US - A - 3 791 411**
**US - A - 4 098 292**

(73) Patentinhaber: **Aeroquip GmbH, Auefeld 1,**
**D-3510 Hann.Münden (DE)**

(72) Erfinder: **Steuerwald, Alfred, Kirchheimbolander**
**Strasse 4, D-6719 Orbis (DE)**

(74) Vertreter: **Patentanwälte Dipl.-Ing. Rudolf Bibrach**
**Dipl.-Ing. Elmar Rehberg, Pütterweg 6 Postfach 738,**
**D-3400 Göttingen (DE)**

ACTORUM AG

## Beschreibung

Die Erfindung bezieht sich auf eine auch unter Druck kuppelbare Schnellverschlusskupplung mit den im Oberbegriff des Anspruches 1 aufgeführten Merkmalen. Eine solche Kupplung kann entweder als normale Kupplung, als Abreisskupplung oder als Rohr-Abreisskupplung eingesetzt werden.

Eine derartige Schnellverschlusskupplung ist aus der DE-B-2 712 117 oder auch der US-A-3 791 411 bekannt. In aller Regel ist es der Ventilkörper des Steckerventils, der nur um den einfachen Öffnungshub verschiebbar in dem Sternkörper gelagert ist, wobei der Sternkörper selbst einen festen Anschlag für die Begrenzung des einfachen Ventilhubes des Ventilkörpers bildet. Gemäss der US-A-3 791 411 kann der Sternkörper mit Hilfe eines Gewindes relativ zum Kupplungskörper des Steckerventils eingestellt werden. Das Muffenventil der DE-B-2 712 117 besitzt einen in Schliessrichtung über eine Schliessfeder beaufschlagten Ventilkörper, der jedoch in aller Regel um das Doppelte des einfachen Ventilhubes verschiebbar in dem Kupplungskörper des Muffenventils gelagert ist.

Bei der Konstruktion nach der DE-B-2 712 117 ist zwar die Strömungsführung vergleichsweise besser gelöst, so dass hier insbesondere ein vergleichbarer Druckverlust infolge Strömungsumlenkung nicht zu erwarten ist, jedoch ist auch hier in nachteiliger Weise das Sperrmittel innerhalb des Durchströmquerschnittes des Muffenventils untergebracht und zwischen dem Sternkörper und dem Ventilkörper angeordnet und wirksam. Dies bedeutet, dass auch hier das Sperrmittel infolge seiner radialen Anordnung und Unterbringung auf kleinem Durchmesser ebenfalls exzentrisch an dem Ventilkörper angreift, was hinsichtlich der Übertragung von Druckkräften von dem Strömungsmedium her auf den Ventilkörper und hinsichtlich der Abstützung dieser Kräfte nicht optimal ist. Auch können die Einzelteile des Sperrmittels nur in begrenzter Grösse ausgebildet werden, was ebenfalls nachteilig ist. Da die Sternkörper des Muffenventils und des Steckerventils nicht in ihrer relativen Lage einstellbar ausgebildet sind, ist eine äusserst präzise toleranzmässige Bearbeitung der Teile erforderlich, um eine ordnungsgemässe Wirkung des Sperrmittels zu erreichen, d. h. einen Anschlag auch dann einzurücken, wenn verlässlich der einfache Ventilhub zurückgelegt ist. Beim Kuppeln unterschiedlicher Stecker mit einer Muffe bzw. umgekehrt können daher die Teile auch in solchen Toleranzen gerade zufällig kombiniert werden, dass die Wirkung des Sperrmittels überhaupt nicht eintritt. Auch bei dieser Konstruktion tritt der weitere Nachteil auf, dass von aussen nicht erkennbar ist, ob das Sperrmittel ordnungsgemäss seine Funktion erfüllt, also beispielsweise die eingesetzte Feder des Sperrmittels nicht gebrochen ist. Bei kleinen Nennweiten baut auch diese bekannte Kupplung im Durchmesser relativ gross, weil das Sperrmittel im Innern eine entsprechende Minimalausdehnung erfordert.

Um dem Nachteil des exzentrischen Kraftangriffes des Sperrmittels an dem Ventilkörper zumindest teilweise zu begegnen, ist es gemäss DE-A-2 715 417 bekannt, ein Teil des Sperrmittels, nämlich ein Schaufelgitter, symmetrisch zur Längsachse der Kupplung auszubilden und anzuordnen, welches dann aber wieder in exzentrischer Weise in Vertiefungen des Schaftes des Ventilkörpers eingreift, wenn es in der gekuppelten Stellung von der dann einsetzenden Strömung betätigt wird. Bei dieser Konstruktion ist das Sperrmittel unmittelbar zwischen dem Kupplungskörper und dem Schaft des Ventilkörpers, also im Innern angeordnet, so dass von aussen nicht erkennbar ist, ob das Sperrmittel in entsprechender Position ordnungsgemäss verriegelt oder nicht verriegelt ist.

Aus der US-A-3 500 859 ist eine Schnellverschlusskupplung bekannt, bei der der Sternkörper des Muffenventils in einer zum Kupplungskörper koaxialen Hülse festgelegt und mit dieser in den Kupplungskörper mindestens entsprechend dem einfachen Ventilhub axial verschieblich gelagert ist. Die Hülse, die den Sitz für den Ventilkörper trägt, ist gestuft ausgebildet und wird von der Kraft einer sich am Kupplungskörper abstützenden Feder in Schliessrichtung des Ventilkörpers beaufschlagt. Durch die gestufte Ausbildung der Hülse ergibt sich eine Wirkfläche, so dass bei einsetzendem Strömungsmitteldruck die Hülse zusätzlich zu der mechanischen Kraft der Feder von einer hydraulischen Kraft auf der Wirkfläche belastet ist. Eine Verriegelung, die als mechanische Verriegelung mittels eines Anschlages verstanden wird, findet hier jedoch nicht statt.

Der Erfindung liegt die Aufgabe zugrunde, eine auch unter Druck kuppelbare Schnellverschlusskupplung der eingangs beschriebenen Art so weiterzubilden, dass sich keine Probleme ergeben hinsichtlich der Unterbringung des als aus- und einrückbarer Anschlag ausgebildeten Sperrmittels zur Verriegelung des für den doppelten Ventilhub vorgesehenen Ventilkörpers in der dem einfachen Hub entsprechenden Stellung. Auch bei kleinen Nennweiten soll es möglich sein, den Durchmesser der Kupplungshälften entsprechend klein zu halten.

Dies wird durch die im Anspruch 1 niedergelegte Erfindung erreicht. Die neue Schnellverschlusskupplung löst sich somit grundsätzlich vom Stand der Technik, indem das Sperrmittel nicht im Innern, also innerhalb des Strömungsquerschnittes, sondern ausserhalb desselben und damit auf grösserem Durchmesser untergebracht und angeordnet wird. Damit können die Einzelteile einer weiteren Sperrkugelverriegelung in Verbindung mit dem aus- und einrückbaren Anschlag in einer vernünftigen Grösse konstruktiv untergebracht werden, wobei der besondere Vorteil entsteht, dass ein symmetrischer Kraftangriff bzw. Kraftabstützung um die Längsachse der Kupplungshälften herum ohne weiteres verwirklicht werden kann. Da die weitere Sperrkugelverriegelung nicht mehr im Innern, sondern in Verbindung mit dem Kupplungskörper ausserhalb des Strömungsquerschnittes angeordnet wird, besteht der weitere Vorteil, dass bei entsprechender Ausbildung ohne weiteres aussen erkennbar gemacht werden kann, ob eine ordnungsgemäss verriegelte Stellung nach dem Kuppeln der Kupplungshälften in bezug auf den aus- und einrückbaren Anschlag eingenommen wird oder nicht. An der Kupplung ist in gekuppelter Stellung aussen sichtbar, dass die Offenstellung des Ventilkörpers, der den doppelten Ventilhub besitzt, ordnungsgemäss verriegelt ist. Dies stellt eine erhebliche Steigerung der Sicherheit beim Gebrauch dar. Die neue Schnellverschlusskupplung besitzt den weiteren Vorteil, dass nach Beendigung des Kuppelvorganges, wenn die Schiebehülse ihre ordnungsgemässe Endposition erreicht hat, die beiden Ventilkörper auch dann verriegelt sind, wenn zwei drucklose Leitungen miteinander gekuppelt worden sind; beim Stand der Technik kann in einem solchen Falle bei Druckschwankungen die Leitungsverbindung einmal abgesperrt, also der Durchgang unterbrochen werden, bevor eine Verriegelung erreicht wird. Ohne einmalige Absperrung wird eine Verriegelung nicht erreicht.

Der Sternkörper kann selbst und unmittelbar in dem Kupplungskörper verschiebbar gelagert sein, wobei hier mindestens ein Hub entsprechend dem einfachen Ventilhub vorgesehen sein muss. Die Vergrösserung dieses Hubes schadet jedoch in keinem Falle, sondern wirkt sich, insbesondere im Hinblick auf die Kombinationsmöglichkeiten mit verschiedenen Steckerventilen, nur positiv aus. Es ist aber auch möglich, dass zwischen Sternkörper und Kupplungskörper eine gesonderte Hülse vorgesehen ist, die den Ventilsitz trägt, an der der Sternkörper abgestützt ist und zwischen der und dem Kupplungskörper die weitere Sperrkugelverriegelung vorgesehen ist. Es ist auch möglich, dass diese Hülse gerade nicht den Ventilsitz trägt. In all diesen Fällen ist jedoch die von aussen betätigbare weitere Sperrkugelverriegelung auf relativ grossem Durchmesser angeordnet.

Gemäss den Merkmalen des Anspruches 2 ergibt sich die Möglichkeit, die Druckfeder in axialer Richtung wirkend anzuordnen und somit die radialen Bauweisen aus dem Stand der Technik zu verlassen. In axialer Richtung steht bei einer Kupplung ohne weiteres eine entsprechende Baulänge zur Verfügung. Die Abstimmung der Kräfte zwischen Druckfeder einerseits und Schliessfedern anderseits legt die Reihenfolge fest, in welcher der Ventilkörper beispielsweise des Muffenventils bei unter Druck stehendem Steckerventilkörper geöffnet wird. Ist die Anordnung so gewählt, wie im Anspruch 2 beschrieben, dann öffnet zunächst der Ventilkörper des Muffenventils. Im zweiten Teil des Ventilhubes bewegen sich der Ventilkörper und der Sternkörper gemeinsam gegenüber dem Kupplungskörper. Ausserdem ist damit sichergestellt, dass auf einfache Weise der Ventilkörper des beispielsweise Muffenventils bei seiner Rückbewegung nach dem doppelten Öffnungshub in die Stellung des einfachen Öffnungshubes nicht in eine Schliessstellung gegenüber dem Sitz gelangt.

Wenn der Sternkörper bzw. die Hülse mit dem grösseren Hub als dem einfachen Ventilhub seines Ventilkörpers im Kupplungskörper verschiebbar gelagert ist, ist sichergestellt, dass verschiedene Steckerventile mit ein und demselben Muffenventil und umgekehrt jeweils gekuppelt werden können und sich Toleranzunterschiede in der Bearbeitung der Einzelteile nicht nachteilig auswirken.

Der aus- und einrückbare Anschlag kann einstellbar ausgebildet sein, um in axialer Richtung Toleranzunterschiede ausschalten und den Anschlag so einstellen zu können, dass eine spielfreie Verriegelung des zugehörigen Ventilkörpers in der gekuppelten Stellung ermöglicht wird. Gleiches gilt für den Ventilkörper des Steckerventils. Eine Möglichkeit der Realisierung zeigt Anspruch 3.

Zur Betätigung der weiteren Sperrkugelverriegelung kann eine auf dem Umfang des Kupplungskörpers gegen Federdruck verschiebbar gelagerte Schiebehülse vorgesehen sein, die vorzugsweise in beiden Betätigungseinrichtungen eine Freigabe der Kugeln zulässt. Als Vorbild bietet sich die Gestaltung der bekannten Schiebehülse an, die bereits bei bekannten sog. Zug-Druck-Kupplungen in beiden Richtungen im Anschluss an einen Verriegelungsnocken Ausweichnuten aufweist. Es kann aber auch eine gemeinsame Schiebehülse gemäss Anspruch 4 vorgesehen sein, so dass sich eine erleichterte Betätigung ergibt. Dabei ist besonders wichtig, dass das Sperrmittel noch nicht beim Entkuppeln der Kupplungshälften in seine den doppelten Ventilhub zulassende Ausrücklage zürckbewegt wird, sondern dass die Ausrücklage mit der Entriegelung der Sperrkugelverriegelung für die Kupplungshälften zugleich freigegeben wird. Um eine zweckmässige Reihenfolge im Verriegelungsablauf zwischen den beiden Sperrkugelverriegelungen zu erreichen, kann die gemeinsame Schiebehülse je einen Verriegelungsnocken und angrenzend mindestens einseitig Ausweichnuten für die Kugeln der der beiden Sperrkugelverriegelungen gemäss Anspruch 5 aufweisen. Damit ist es möglich, die Sperrkugelverriegelung für die beiden Kupplungshälften bereits geschlossen zu haben, also in die verriegelte Stellung übergeführt zu haben, ohne dass die weitere Sperrkugelverriegelung bereits verriegelt ist. Damit ist aber zwangsläufig verbunden, dass sich die Schiebehülse relativ zum Kupplungskörper noch nicht in ihrer die ordnungsgemässe Verriegelung beider Sperrkugelverriegelungen anzeigenden Endlage befindet. Es ist also von aussen sichtbar, dass nur eine Sperrkugelverriegelung wirksam ist. Erst wenn Druck über den vorher drucklosen Leitungsteil herangeführt wird, gelangt auch die weitere Sperrkugelverriegelung des ein- und ausrückbaren Anschlages in ihre Verriegelungsstellung, wobei dann die Schiebehülse ihre Endlage einnimmt. Werden die beiden Kupplungshälften jedoch miteinander gekuppelt, ohne dass eine der beiden Hälften unter Druck stand, dann kann durch entsprechende Dimensionierung der Kräfte der Druckfeder einerseits und Schliessfeder anderseits eine solche Zwischenstellung vermieden oder bewusst herbeigeführt werden. Die Kupplungshülse kann gemäss Anspruch 6 Markierungen aufweisen. Bei der Ausbildung als Zug-Druck-Kupplung erhöht sich die Zahl der Markierungen auf das Doppelte.

Auch bei hohen und höchsten Anwendungsdrücken wird ein verlässliches selbsttätiges Schliessen der zweiten Sperrkugelverriegelung dadurch erreicht, dass der Verriegelungsnocken an der gemeinsamen Schiebehülse axial verschieblich gelagert ist und in die Mittelstellung seines Hubes federbeaufschlagt ist. Der Verriegelungsnocken der zweiten Sperrkugelverriegelung wird somit beweglich gegenüber de gemeinsamen Schiebehülse gemacht, wobei er begrenzt axial verschieblich gelagert ist und in die Mittelstellung federbeaufschlagt ist, so dass er bestrebt ist, immer diese Mittelstellung einzunehmen. Anderseits ist der Verriegelungsnocken aber nicht gehindert, sich axial seitlich zu verschieben, wenn auf ihn entsprechende Kräfte einwirken. Da bei derartigen Kupplungen beim Öffnen nach entsprechender Druckbeaufschlagung des Muffenventils an sich immer die Stellung erreicht wird, in welcher der Ventilkörper der den doppelten Ventilhub ausführen möge, auf dem einfachen Ventilhub fixiert werden soll, kann die Federkraft und der axial bewegliche Verriegelungsnocken geschickt dazu ausgenutzt werden, damit dieser eine Relativbewegung selbst dann ausübt, wenn die gemeinsame Schiebehülse durch die radial von den Kugeln des ersten Kugelgesperres ausgeübte Kraft an der Bewegung gehindert wird.

Mit besonderem Vorteil ist der Verriegelungsnocken als Ring in einer durch die Ausweichnuten gebildeten Ausnehmung der gemeinsamen Schiebehülse begrenzt axial verschieblich gelagert, wobei zwei etwa gleichstarke Federn rechts und links von dem ringförmigen Verriegelungsnocken gelagert sind. Die Federn sind zweckmässig entsprechend vorgespannt, wobei der ringförmige Verriegelungsnocken auf seiner Innenseite Anlaufschrägen für die Kugeln aufweisen kann. Dies erleichtert das Schliessen der zweiten Sperrkugelverriegelung.

Die beiden Federn sind ausserhalb des radialen Bewegungsbereiches der Kugeln angeordnet, damit sie durch die Kugeln nicht geklemmt werden und ihre axial gerichtete Kraft auf den ringförmigen Verriegelungsnocken in jeder Stellung übertragen können.

Ausführungsbeispiele der Erfindung sind, jeweils in zusammengefassten Halbschnitten, in den Figuren dargestellt und werden im folgenden beschrieben. Es zeigen:

Fig. 1 einen Schnitt durch die beiden ersten Ausführungsformen der Schnellverschlusskupplung beim Einstecken des Steckerventils in das Muffenventil,

Fig. 2 einen Schnitt durch die beiden ersten Ausführungsformen während des Kuppelns nach Freigabe der beiden Sperrkugelverriegelungen,

Fig. 3 einen Schnitt durch die beiden ersten Ausführungen der Schnellverschlusskupplung in einem weiteren Stadium der Kupplungsbewegung,

Fig. 4 einen Schnitt durch die beiden ersten Ausführungen der Schnellverschlusskupplung in gekuppelter und verriegelter Stellung der beiden Sperrkugelverriegelungen,

Fig. 5 einen Schnitt durch zwei weitere Ausführungsformen der Schnellverschlusskupplung beim Einstecken des Steckerventils in das Muffenventil,

Fig. 6 einen Schnitt durch die weiteren Ausführungsformen während des Kuppelns nach Freigabe der beiden Sperrkugelverriegelungen,

Fig. 7 einen Schnitt durch die weiteren Ausführungen der Schnellverschlusskupplung in einem weiteren Stadium der Kupplungsbewegung, und

Fig. 8 einen Schnitt durch die weiteren Ausführungen der Schnellverschlusskupplung in gekuppelter und verriegelter Stellung der beiden Sperrkugelverriegelungen.

Jede Schnellverschlusskupplung besteht grundsätzlich aus einem Steckerventil 1 und einem Muffenventil 2. Von dem Steckerventil 1 ist nur eine einzige Ausführungsform gezeigt, während das Muffenventil in der oberen Zeichnungshälfte eine erste Ausführungsform und in der unteren Zeichnungshälfte eine zweite Ausführungsform in sämtlichen Figuren zeigt.

Das Steckerventil 1 besteht im wesentlichen aus einem Kupplungskörper 3 mit einem Sitz 4. Im Kupplungskörper 3 ist der Sternkörper 5, der über den Umfang verteilt drei abstehende Arme 6 aufweist, mit Hilfe des Sicherungsringes 7 gelagert. Ansonsten ist der Sternkörper 5 hülsenförmig ausgebildet und besitzt mittig eine Durchbohrung 8, in der der Schaft 9 eines Ventilkörpers 10 verschiebbar geführt ist. Der Ventilkörper 10 bildet mit dem Sitz 4 des Kupplungskörpers 3 ein Rückschlagventil 10, 4, welches die betreffende Leitung, die mit dem Steckerventil 1 verbunden ist, wie ersichtlich, abschliesst. Der Ventilkörper 10 wird gegen den Sitz 4 mit Hilfe einer Schliessfeder 11 gedrückt, die anderseits den Sternkörper 5 an dem Sicherungsring 7 in Anlage hält. Der Ventilkörper 10 ragt in geschlossener Stellung über die Stirnwand 12 des Steckerventils 1 um das Mass a' hinaus. In der Durchbohrung 8 ist weiterhin mit Hilfe eines Gewindes die Einstellschraube 13 gelagert, deren vorderes Ende einen Anschlag 14 für das Ende des Schaftes 9 bzw. den Ventilkörper 10 bildet. Die Einstellschraube 13 wird im Sternkörper 5 mit Hilfe des Gewindes so eingestellt, dass sich der Anschlag 14 in der Entfernung a' vom Ende des Schaftes 9 des Ventilkörpers 10 befindet. Der Ventilkörper 10 kann also zwischen seiner Offenstellung und seiner Schliessstellung den Ventilhub a' zurücklegen.

Der Kupplungskörper 3 besitzt an der dargestellten Stelle eine umlaufende Verriegelungsnut 15, die mit einer noch später zu beschreibenden Sperrkugelverriegelung zur Verriegelung des Steckerventils 1 mit dem Muffenventil 2 in der gekuppelten Stellung und zur Freigabe der beiden Teile 1, 2 in der entkuppelten Stellung zusammenwirkt.

Das Muffenventil 2 besitzt nun ebenfalls ähnlich wie das Steckerventil 1 einen Kupplungskörper 16, der auf ein Anschlussstück 17 aufgeschraubt ist, wobei eine Dichtung 18 den Innenraum druckdicht abschliesst. Bei der jeweils oben gezeichneten Ausführungsform ist im Kupplungskörper 16 eine Sitzhülse 19 verschiebbar gelagert, in welcher ein Sternkörper 20 mit Hilfe des Sicherungsringes 21 gelagert ist. Die Sitzhülse 19 trägt den Sitz 22. Bei der jeweils in der unteren Hälfte jeder Zeichnung dargestellten Ausführungsform fehlt die gesonderte Einschaltung der Sitzhülse 19. Statt dessen ist der Sternkörper 20 direkt im Kupplungskörper 16 verschiebbar gelagert. Zu diesem Zweck weist der Sternkörper 20 in der zweiten Ausführungsform eine Gleithülse 23 auf. In beiden Fällen besitzt der Sternkörper 20 beispielsweise drei radial abstehende Arme 24, zwischen denen über den Umfang gesehen die Strömung stattfinden kann. Bei der Ausführungsform des Sternkörpers 20 mit Gleithülse 23 ist der Sitz 22 vom Kupplungskörper 16 gebildet.

Ähnlich wie bei dem Steckerventil 1 ist auch an dem Muffenventil 2 mittig an dem Sternkörper 20 eine Bohrung 25 vorgesehen, die den Schaft 26 des Ventilkörpers 27 verschieblich aufnimmt. Der Ventilkörper 27 bildet mit dem Sitz 22 das Rückschlagventil 22, 27 des Muffenventils 2. Das vordere Ende des Ventilkörpers 27 ragt über die Stirnebene 28 um das Mass a vor. In dem Sternkörper 20 ist eine Einstellschraube 29 mit Hilfe eines Gewindes ver- und einstellbar angeordnet, deren vorderes Ende einen Anschlag 30 für das hintere Ende des Schaftes 26 bzw. des Ventilkörpers 27 bildet. Die Einstellschraube 29 wird so eingestellt, dass der Ventilkörper 27 beim Öffnen den Ventilhub a ausführen kann, bevor er mit seinem Schaft 26 auf den Anschlag 30 auftrifft. Zwischen dem Sternkörper 20 und dem Ventilkörper 27 ist die Schliessfeder 31 eingeschaltet. Der Ventilhub a des Muffenventils 2 entspricht in etwa dem Ventilhub a′ des Steckerventils 1. Beide Ventilhübe a und a′ unterscheiden sich nur durch herstellungsbedingte Toleranzen. Grundsätzlich wird bei der Fertigung das gleiche Mass angestrebt und eingestellt.

Der Sternkörper 20 ist bei der oberen Ausführungsform über die Sitzhülse 19 bzw. mit dieser und bei der unteren Ausführungsform direkt über seine Gleithülse 23 im Kupplungskörper 16 axialverschieblich gelagert, wobei für Abdichtzwecke die beiden Dichtungen 32 und 33 angeordnet sind. In beiden Fällen wird damit erreicht, dass der Sternkörper 20 gegenüber dem Kupplungskörper 16 um das Mass b axial verschiebbar ist. Das Mass b ist mindestens gleichgross wie der Ventilhub a′ (bzw. a) ausgebildet, zwecks erleichterter Fertigung jedoch grösser gewählt. Auf jeden Fall wird damit ermöglicht, dass der Ventilkörper 27 des Muffenventils 2 insgesamt um den doppelten Ventilhub 2a verschiebbar gelagert ist, während der Ventilkörper 10 des Steckerventils 1 nur um den einfachen Ventilhub a′ verschiebbar ist. Der Sternkörper 20 mit seiner Gleithülse 23 bzw. die gesonderte Sitzhülse 19 stützen sich über eine Druckfeder 34 an dem Anschlussstück 17 oder an einem Absatz des Kupplungskörpers 16 ab. Die Kraft der Druckfeder 34 ist grösser gewählt als die Kraft der Schliessfeder 31, so dass auf diese Weise eine eindeutige zeitliche Folge der Relativbewegungen festgelegt ist.

Der Kupplungskörper 16 wird von einer Schiebehülse 35 umgeben, die hier als gemeinsame Schiebehülse ausgebildet ist und zur Betätigung von zwei verschiedenen Sperrkugelverriegelungen, wie nachfolgend noch erläutert wird, dient. Die Schiebehülse 35 ist an dem Kupplungskörper 16 mit Hilfe der Feder 36 in beiden Richtungen verschiebbar gelagert. Die gesamte Schnellverschlusskupplung ist als sog. Zug-Druck-Kupplung ausgebildet, d. h. die Schiebehülse 35 kann in beiden Richtungen gegenüber dem Kupplungskörper zum Zwecke der Freigabe der beiden Sperrkugelverriegelungen verschoben werden.

Im einzelnen besitzt die Schiebehülse 35 einen relativ breit ausgebildeten Verriegelungsnocken 37, an welchen zwei Ausweichnuten 38 und 39 nach beiden Richtungen anschliessen. An der Stelle des Verriegelungsnockens 37 besitzt der Kupplungskörper 16 in an sich bekannter Weise eine Reihe von radialen Durchbrechungen 40, in welchen Kugeln 41 gelagert sind. Der Verriegelungsnocken 37 bildet in Verbindung mit den Ausweichnuten 38, 39 den Kugeln 41 und der Verriegelungsnut 15 des Steckerventils 1 eine erste Sperrkugelverriegelung 15, 37, 38, 39, 40, 41, welche zur Verriegelung von Steckerventil 1 und Muffenventil 2 in der gekuppelten Stellung bzw. zur Freigabe der beiden Teile in der entkuppelten Stellung dient. Derartige Sperrkugelverriegelungen sind an sich bekannt und bedürfen daher keiner weiteren Beschreibung.

Zur Abdichtung zwischen Steckerventil 1 und Muffenventil 2 ist am Kupplungskörper 16 des Muffenventils 2 die weitere Dichtung 42 untergebracht.

Die gemeinsame Schiebehülse 35 dient gleichzeitig zur Betätigung einer zweiten Sperrkugelverriegelung. Zu diesem Zweck besitzt die Schiebehülse 35 einen weiteren umlaufend ausgebildeten Verriegelungsnocken 43, der gegenüber dem Verriegelungsnocken 37 vergleichsweise weniger breit ausgebildet ist.

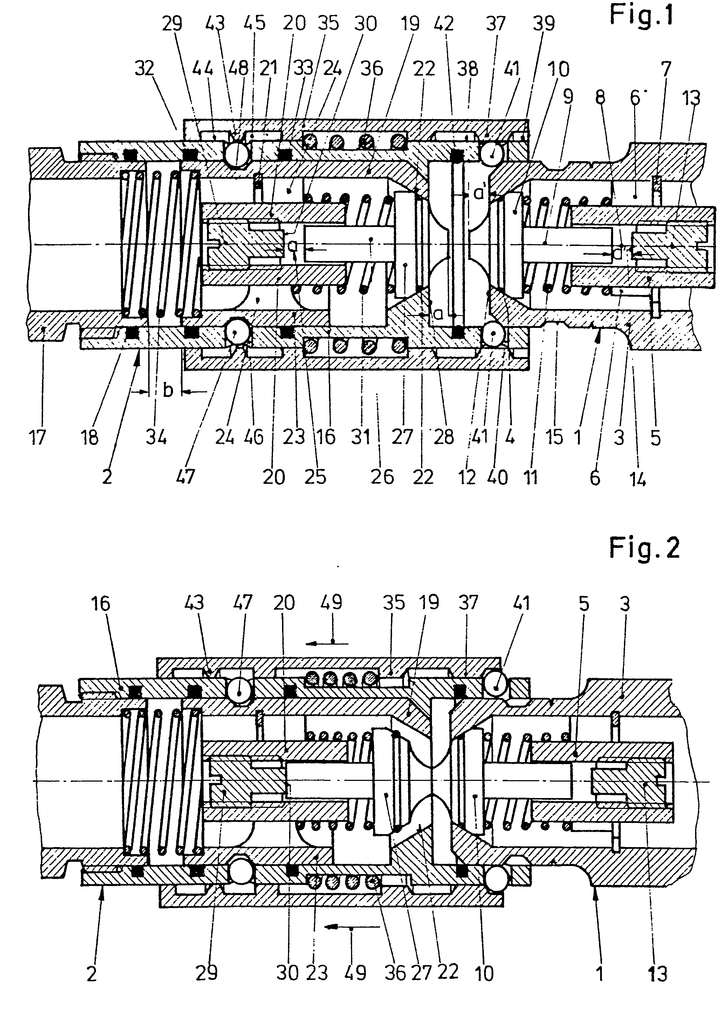

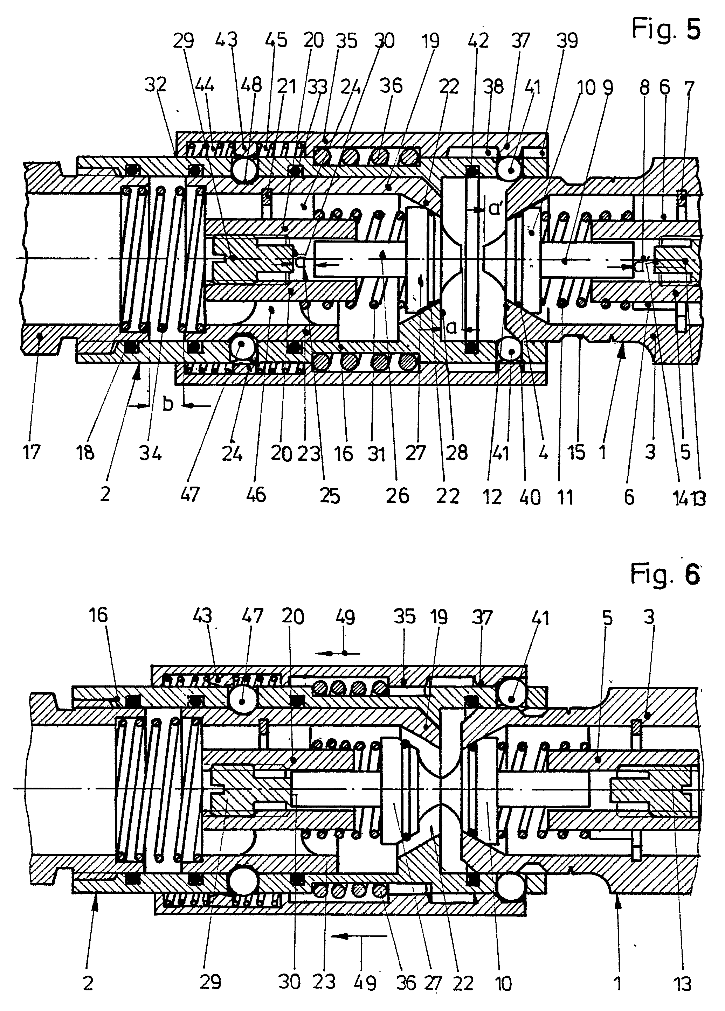

Bei den Ausführungsformen der Fig. 5 bis 8 ist an der Schiebehülse 35 ein umlaufend ringförmig ausgebildeter Verriegelungsnocken 43 axialverschieblich gelagert, der gegenüber dem Verriegelungsnocken 37 vergleichsweise weniger breit ausgebildet sein kann. An dem Verriegelungsnocken 43 schliessen sich nach beiden Seiten wiederum Ausweichnuten 44 und 45 an. Diesen bzw. dem Verriegelungsnocken 43 zugeordnet besitzt der Kupplungskörper 16 (Fig. 1 bis 8) mehrere über den Umfang verteilt angeordnete Durchbrechungen 46 zur Aufnahme der Kugeln 47. Eine umlaufende Verriegelungsnut 48 ist in der Sitzhülse 19 bzw. in der Gleithülse 23 des Sternkörpers 20 aussen eingearbeitet. Der Verriegelungsnocken 43 bildet in Verbindung mit den Ausweichnuten 44, 45, den Durchbrechungen 46 in dem Kupplungskörper 16, den Kugeln 47 und der Verriegelungsnut 48 die zweite Sperrkugelverriegelung 43 bis 48, welches zur Verriegelung des Sternkörpers 20 gegenüber dem Kupplungskörper 16 bzw. in seiner anderen Stellung zur Freigabe dient. Die zweite Sperrkugelverriegelung 43 bis 48 bildet in Verbindung mit dem Anschlag 30 an der Einstellschraube 29 des Sternkörpers 20 einen ein- und ausrückbaren Anschlag zur Begrenzung bzw. Freigabe der axialen Bewegung des Ventilkörpers 27. Wenn die zweite Sperrkugelverriegelung 43 bis 48 verriegelt ist, wie dies Fig. 1 zeigt, ist der Anschlag 30 eingerückt, so dass der Ventilkörper 27 maximal den einfachen Ventilhub a zurücklegen kann, falls auf die Spitze des Ventilkörpers 27 eine entsprechende Kraft ausgeübt wird, die zur Überwindung der Kraft der Schliessfeder 31 führt. Ist dagegen die zweite Sperrkugelverriegelung 43 bis 48 ausgerückt bzw. freigegeben, wie dies beispielsweise Fig. 2 zeigt, dann kann der Ventilkörper 27 nicht nur den einfachen Ventilhub a ausführen, sondern relativ zu der Stirnebene 28 den doppelten Ventilhub zurücklegen, der sich aus der Summe der einzelnen Ventilhübe a + a' ≈ 2 · a zusammensetzt.

Bei den Ausführungsformen der Fig. 5 bis 8 bilden die Ausweichnuten 44 und 45 eine axial durchgehende Ausnehmung, in der der ringförmige Verriegelungsnocken 43 begrenzt axialverschieblich gegenüber der gemeinsamen Schiebehülse 35 gelagert und durch zwei Federn 54 und 55 in Richtung auf die axiale Mittellage seines Hubes beaufschlagt ist.

Es versteht sich, dass anstelle der gemeinsamen Schiebehülse 35 auch je eine Schiebehülse zur Betätigung der ersten Sperrkugelverriegelung 15, 37 bis 41 und eine weitere Schiebehülse zur Betätigung der zweiten Sperrkugelverriegelung 43 bis 48 vorgesehen sein könnte. Auch dabei könnte der Verriegelungsnocken 43 gemäss den Fig. 5 bis 8 axialverschieblich in der einen Schiebehülse gelagert sein. Die gemeinsame Schiebehülse 35 zur Betätigung beider Sperrkugelverriegelungen vereinfacht jedoch die Handhabung wesentlich (Fig. 1 bis 8).

Hinsichtlich der Wirkungsweise sei zunächst die in den vier Figuren jeweils in der unteren Hälfte dargestellte Ausführungsform betrachtet:

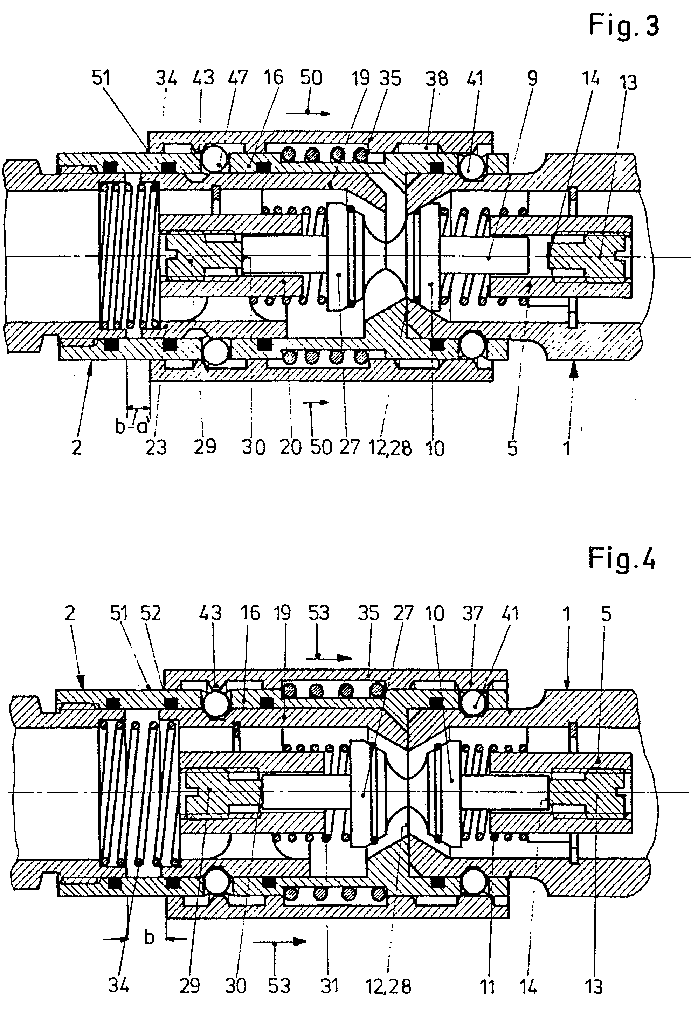

Die Schnellverschlusskupplung ist auch unter Druck kuppelbar, d.h. dass eine Leitung der beiden zu verbindenden Leitungsteile unter Druck stehen kann. Bei dem in der Zeichnung dargestellten Ausführungsbeispiel möge die Leitung, die an das Steckerventil 1 angeschlossen ist, unter Druck stehen, so dass das Rückschlagventil 4, 10 nicht nur durch den Druck der Schliessfeder 11, sondern auch durch den Druck des eingesperrten Mediums beaufschlagt und in der Schliesslage gehalten wird. Die am Muffenventil 2 angeschlossene Leitung ist drucklos. Beim Einführen des Steckerventils 1 in das Muffenventil 2 können die Teile zunächst so weit ineinander gesteckt werden, wie dies Fig. 1 zeigt. Die Phase an der Stirnwand 12 stösst damit an die Kugeln 41 der ersten Sperrkugelverriegelung 15, 37 bis 41 an, welches sich in der verriegelten Stellung befindet. Anschliessend wird die Schiebehülse 35 gemäss den Pfeilen 49 in Fig. 2 (oder in der entgegengesetzten Richtung) relativ gegenüber dem Kupplungskörper 16 verschoben, so dass sowohl die erste Sperrkugelverriegelung 15, 37 bis 41, als auch die zweite Sperrkugelverriegelung 43 bis 48 freigegeben bzw. entriegelt wird. Bei den Ausführungsbeispielen der Fig. 5 bis 8 halten bzw. schieben die Federn 54 und 55 den Verriegelungsnocken 43 in seine Mittellage. In allen Ausführungsformen können die Kugeln 41 in die Ausweichnut 39 ausweichen, so dass das Steckerventil 1 weiter in das Muffenventil 2 hineingeschoben werden kann. Da das Rückschlagventil 4, 10 durch den Druck des eingeschlossenen Mediums in seiner Schliessstellung gehalten wird, öffnet in der Fortsetzung der Einschiebebewegung das Rückschlagventil 22, 27, indem der Ventilkörper 27 den einfachen Ventilhub a zurücklegt und damit mit seinem Schaft 26 auf dem Anschlag 30 zur Anlage kommt. Diese Zwischenstellung ist in Fig. 2 dargestellt. Da die Schliessfeder 31 schwächer ausgebildet ist als die Druckfeder 34, wird, wie in Fig. 2 dargestellt, sich zunächst der Ventilkörper 27 gegenüber dem Sternkörper 20 verschieben. Wäre dagegen die Schliessfeder 31 stärker ausgebildet als die Druckfeder 34, so würde sich zunächst der Sternkörper 20 relativ zu dem Kupplungskörper 16 verschieben. Da mit dem Verschieben der Schiebehülse 35 auch die zweite Sperrkugelverriegelung 43 bis 48 in die Freigabeposition gekommen ist, kann das Steckerventil 1 bei geschlossenem Rückschlagventil 10, 4 jedoch noch weiter in das Muffenventil 2 eingeschoben werden, wobei jetzt über den Anschlag 30 der Sternkörper 20 mitgenommen wird, so dass sich das Mass b verkleinert. Der Ventilkörper 27 legt jetzt zusätzlich zu dem einfachen Ventilhub a einen weiteren Ventilhub a zurück, so dass der Ventilkörper 27 insgesamt etwa den doppelten Ventilhub 2a ausführt. Diese Stellung der Teile ist in Fig. 3 wiedergegeben. Es versteht sich, dass dabei die Kugeln 47 aus der Verriegelungsnut 48 herausgetreten und in die Ausweichnut 45 verschoben worden sind. Nach dem Loslassen der Schiebehülse 35 hat sich diese in Richtung der Pfeile 50 in Fig. 3 bewegt, so dass die erste Sperrkugelverriegelung 15, 37 bis 41 schon in seine Schliessposition zurückgekehrt ist, während die zweite Sperrkugelverriegelung 43 bis 48 noch offen ist. Dabei wird für die Ausführungsformen der Fig. 5 bis 8 die Feder 54 zusammengedrückt und die Feder 55 teilentlastet. Dies bedeutet, wie in Fig. 3 bis 7 dargestellt, dass das Steckerventil 1 bereits mit dem Muffenventil 2 gekuppelt ist, so dass das Steckerventil 1 nicht mehr aus dem Muffenventil 2 herausgezogen oder herausgedrückt werden kann. Eine auf dem Aussenumfang des Kupplungskörpers 16 angebrachte Markierung 51, beispielsweise in Form einer umlaufenden Einkerbung, deckt sich in dieser Stellung mit der Stirnwand der Schiebehülse 35 (Fig. 3), so dass von aussen an der Schnellverschlusskupplung erkennbar ist, dass die erste Sperrkugelverriegelung 15, 37 bis 41 sich bereits in der verriegelten Stellung befindet und hinsichtlich der Fig. 1 bis 4 die zweite Sperrkugelverriegelung 43 bis 48 noch nicht verriegelt ist.

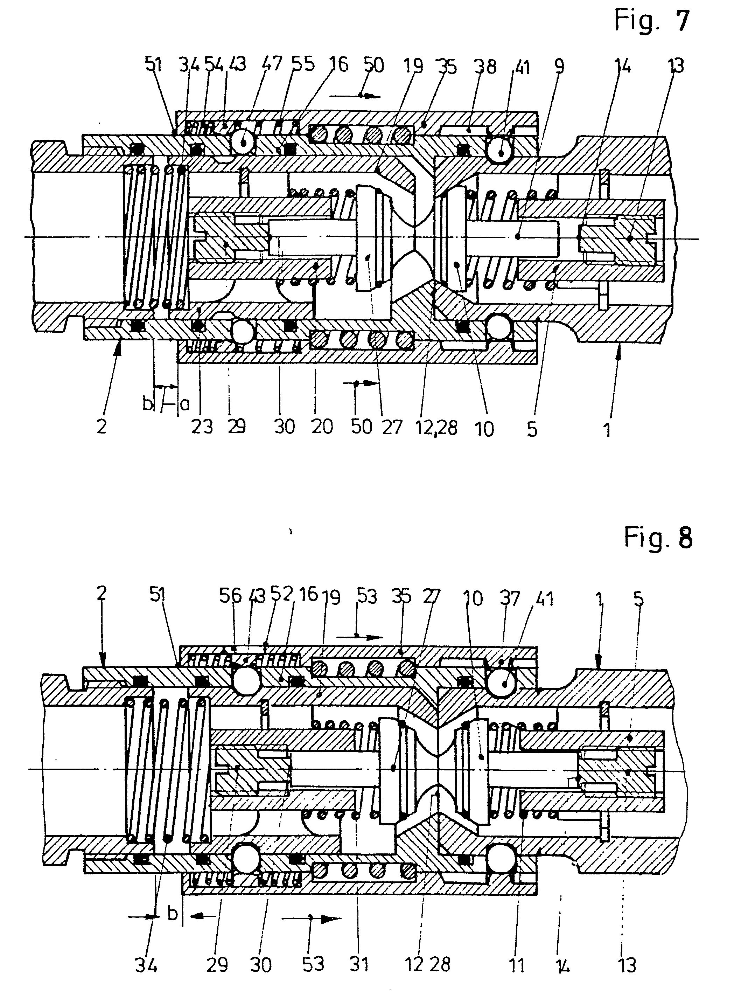

Wird jetzt auf die Leitung, die mit dem Muffenventil 2 verbunden ist, Druck gegeben, beispielsweise durch Einschalten der Druckmittelquelle, so strömt das Druckmedium über die Zwischenräume zwischen den Armen 24 über das geöffnete Rückschlagventil 22, 27 gegen den Ventilkörper 10 und belastet diesen damit zusätzlich entgegen der Kraft der Schliessfeder 11 und des dort eingesperrten Druckes. Zusätzlich wirkt auf den Ventilkörper 10 über den Ventilkörper 27 der Druck der Druckfeder 34, so dass insgesamt oder bei entsprechender Druckhöhe auf jeden Fall eine Öffnungsbewegung des Rückschlagventils 10, 4 erfolgt, so dass der Druckausgleich hergestellt ist. Infolge der Strömung des Druckmediums aus der an dem Muffenventil 2 angeschlossenen Leitung in Richtung auf die Leitung des Steckerventils 1 wirkt dieser Druck auch auf die Rückseite des Ventilkörpers 27, wobei diese Bewegung durch die Kraft der Druckfeder 34 unterstützt wird. Auf diese Weise bewegt sich der Ventilkörper 27 wiederum um den einfachen Ventilhub a' nach rechts, wobei der Ventilkörper 10 mitgenommen wird und selbstverständlich ebenfalls den einfachen Ventilhub a' ausführt, bis sein Schaft 9 auf dem festen Anschlag 14 zur Anlage kommt. Diese Stellung der Teile ist in Fig. 4 dargestellt. Während dieser Bewegung, die der Ventilkörper 27 gemeinsam mit dem Sternkörper 20 ausführt, ohne dass der Schaft 26 von dem Anschlag 30 freikommt, verschiebt sich auch die Gleithülse 23 des Sternkörpers 20 so weit nach rechts, dass die Verriegelungsnut 48 in den Bereich der Kugeln 47 gelangt, so dass sich zusätzlich zu der ersten Sperrkugelverriegelung auch das zweite Kugelgesperre 43 bis 48 nunmehr schliessen kann. Diese Schliessstellung wird in den Ausführungsformen der Fig. 5 bis 8 durch die axialverschiebliche Lagerung des Verriegelungsnockens 43 und die Kraft der Feder 54 ermöglicht. Sowohl die erste Sperrkugelverriegelung 15, 37 bis 41 als auch die zweite Sperrkugelverriegelung 43 bis 48 befinden sich dann in der verriegelten Stellung, wie dies Fig. 4 bzw. 8 zeigt. Eine weitere Markierung 52 (Fig. 4) auf dem Aussenumfang des Kupplungskörpers 16 wird damit relativ zu dem Ende der Schiebehülse 35 sichtbar, wenn sich diese gemäss Pfeil 53 in die in Fig. 4 gezeichnete Endlage verschoben hat. Der Aussenumfang der Schiebehülse 35 in Verbindung mit einer Ausnehmung 56 zeigt an, dass sich der Verriegelungsnocken 43 gemäss Pfeil 53 in die in Fig. 8 gezeichnete Endlage verschoben hat. Die Markierungen 51 und 52 zeigen verlässlich an, dass beide Sperrkugelverriegelungen verriegelt sind. Dies bedeutet, dass auch der Anschlag 30 wieder eingerückt, also wirksam ist. Die beiden Ventilkörper 10 und 27 befinden sich somit in fest verriegelter Lage zwischen den Anschlägen 14 und 30, so dass auch Druckschwankungen des Druckmediums zu keiner wesentlichen Verschiebung der Ventilkörper 10, 27 in den Teilen 1, 2 der Schnellverschlusskupplung führen können. Bei dieser Betrachtung ist vorausgesetzt, dass die Stirnfläche 12 des Steckerventils 1 und die Stirnebene 28 des Muffenventils 2 in der gekuppelten Stellung eine gemeinsame Stirnflächenebene einnehmen, wie dies Fig. 4 zeigt.

Zum Zwecke der Entkupplung wird die Schiebehülse 35 aus der Stellung gemäss Fig. 4 bis 8 heraus entweder in Richtung der Pfeile 49 oder in der entgegengesetzten Richtung betätigt, so dass die beiden Sperrkugelverriegelungen 15, 37 bis 41 und 43 bis 48 entriegelt werden. Je nach den herrschenden Druckverhältnissen wird das Steckerventil 1 aus dem Muffenventil 2 herausgedrückt, wobei sich beide Rückschlagventile 20, 4 und 22, 27 in die Schliessstellung bewegen, wie dies in Fig. 1 bzw. 5 dargestellt ist.

Die in den Fig. 1 bis 4 bzw. 5 bis 8 in der oberen Hälfte dargestellte Ausführungsform besitzt eine analoge Wirkungsweise, wobei hier der Sternkörper 20 gemeinsam mit der Sitzhülse 19 verschoben wird. Die Zeichnungen zeigen die verschiedenen Zwischenstellungen unter der Voraussetzung, dass die Druckfeder 34 stärker ausgebildet ist als die Schliessfeder 31. Macht man hingegen die Schliessfeder 31 stärker als die Druckfeder 34, so hätte dies eine etwas andere Wirkungsweise zur Folge. Bei der Zwischenstellung nach Fig. 2 bzw. 6 entstünde dann der möglicherweise erwünschte Vorteil, dass beide Rückschlagventile 4, 10 und 22, 27 in dieser Zwischenstellung geschlossen wären. Sofern man dann noch das Mass b mindestens doppelt so gross wählt wie den einfachen Ventilhub a', könnte eine solche Kupplung hinsichtlich ihrer ersten Sperrkugelverriegelung vollkommen geschlossen werden, wobei sich in dieser Schliessstellung selbst beide Rückschlagventile 10, 4 und 22, 27 noch in der Schliessstellung befinden. Es müsste dann allerdings durch entsprechenden Druckaufbau bzw. Druckabsenkung oder auf andere Weise erreicht werden, dass beide Rückschlagventile eine Offenstellung gemäss Fig. 4 bzw. 8 erreichen können und eine entsprechende Verriegelung dieser Stellung erfolgt.

Es versteht sich, dass bei den dargestellten Ausführungsformen die Schnellverschlusskupplung selbstverständlich auch dann gekuppelt und entkuppelt werden kann, wenn keine der beiden jeweils an das Steckerventil 2 und an das Muffenventil 2 angeschlossenen Leitungen während des Kupplungs- bzw. Entkupplungsvorganges unter Druck stehen. In einem solchen Fall tritt dann je nach der Abstimmung der Federn 11, 31, 34 untereinander eine unterschiedliche Reihenfolge der Bewegungen der einzelnen Ventilkörper relativ zu den Kupplungskörpern 3 bzw. 16 auf. Ist z.B. die Druckfeder 34 stärker ausgebildet als die Schliessfeder 31 und die Schliessfeder 11, wobei die Schliessfeder 11 und die Schliessfeder 31 kraftmässig etwa gleich sind, dann wird beim Kupplungsvorgang ohne Druck der Ventilkörper 10 den einfachen Ventilhub a' ausführen, während der Ventilkörper 27 den einfachen Ventilhub a ausführt, so dass unmittelbar die Offenstellung der beiden Rückschlagventile 4, 10 und 22, 27 gemäss Fig. 4 erreicht wird. Aber auch in diesem Falle wird unmittelbar die Verriegelungsstellung erreicht, wenn der Kupplungsvorgang beendet ist und die Schiebehülse ihre Endposition erreicht hat. Der Durchgang durch die Schnellverschlusskupplung ist geöffnet und bleibt geöffnet, weil die Ventilkörper schon vor dem Einschalten der Druckquelle verriegelt sind. Ein einmaliger Schliessvorgang im Sinne einer doppelten Hubbewegung ist zur Erreichung der Verriegelungsstellung nicht mehr erforderlich.

**Patentansprüche**

1. Auch unter Druck kuppelbare Schnellverschlusskupplung, insbesondere für Hydraulikleitungen, bestehend aus zwei ineinandersteckbaren und in der gekuppelten Stellung über eine Sperrkugelverriegelung (15, 37–41) verriegelbaren Kupplungshälften in Form eines Stecker- (1) und eines Muffenventils (2) mit je einem durch eine Schliessfeder (11, 31) in Schliessrichtung belasteten und in entkuppelter Stellung der Kupplungshälften in Schliessstellung gehaltenen und in einem in einem Kupplungskörper (3, 16) gelagerten Sternkörper (5, 20) geführten Ventilkörper (10, 27), von denen die eine Kupplungshälfte (1) mit einem festen, den Hub (a') des Ventilkörpers (10) in seiner Offenstellung begrenzenden Anschlag (14) versehen ist, während der Ventilkörper (27) der anderen Kupplungshälfte (2) einen Hub (2a bzw. a + a') gleich dem doppelten Ventilhub (a') des anderen Ventilkörpers (10) ausführen kann und am Ende des einfachen Ventilhubes (a) ein aus- und einrückbarer Anschlag (30) zur Freigabe des doppelten Ventilhubes beim Kuppeln bzw. zur Verriegelung dieses Ventilkörpers (27) in einer dem einfachen Ventilhub entsprechenden Offenstellung für den Betrieb vorgesehen ist, dadurch gekennzeichnet, dass der Sternkörper (20) der den doppelten Ventilhub (2a bzw. a + a') besitzenden Kupplungshälfte (2) in einer zum Kupplungskörper (16) koaxialen Hülse (19, 23) festgelegt und mit dieser in dem Kupplungskörper (16) mindestens entsprechend dem einfachen Ventilhub axial verschieblich gelagert ist, und dass zum Aus- und Einrücken des Anschlages (30) ausserhalb des Strömungsquerschnittes eine von aussen betätigbare weitere Sperrkugelverriegelung (43–48) zwischen der Hülse (19, 23) und dem Kupplungskörper (16) vorgesehen ist.

2. Schnellverschlusskupplung nach Anspruch 1, dadurch gekennzeichnet, dass der Sternkörper (20) bzw. die Hülse (19, 23), die den Sitz (22) für den Ventilkörper (27) tragen kann, über eine in Schliessrichtung des Ventilkörpers (27) wirkende Druckfeder (34) an dem Kupplungskörper (16) abgestützt ist, und dass die Druckfeder (34) stärker als die Schliessfeder (31) des Ventilkörpers ausgebildet ist.

3. Schnellverschlusskupplung nach Anspruch 1, dadurch gekennzeichnet, dass der aus- und einrückbare Anschlag (30) für den Hub des Ventilkörpers (27) eine im Sternkörper (20) gelagerte Einstellschraube (29) aufweist.

4. Schnellverschlusskupplung nach Anspruch 3, dadurch gekennzeichnet, dass eine gemeinsame Schiebehülse (35) für die Betätigung der Sperrkugelverriegelung (43–48) des ein- und ausrückbaren Anschlages (30) und der Sperrkugelverriegelung (15, 37–41) für das Kuppeln bzw. Entkuppeln der beiden Kupplungshälften (1, 2) vorgesehen ist.

5. Schnellverschlusskupplung nach Anspruch 4, dadurch gekennzeichnet, dass die gemeinsame Schiebehülse (35) je einen Verriegelungsnocken (37, 43) und angrenzend mindestens einseitig Ausweichnuten (38, 44 und/oder 39, 45) für die Kugeln (41, 47) der beiden Sperrkugelverriegelungen aufweist, wobei die beiden Verriegelungsnocken (37, 43) aufeinander abgestimmt sind und der Verriegelungsnocken (43) der Sperrkugelverriegelung (43–48) des aus- und einrückbaren Anschlages (30) eine vergleichsweise geringe axiale Breite aufweist.

6. Schnellverschlusskupplung nach Anspruch 5, dadurch gekennzeichnet, dass der Kupplungskörper (16) relativ zu der Schiebehülse (35) eine oder zwei Markierungen (51, 52) zur Anzeige des eingerückten Anschlages (30) und/oder zur Anzeige der gekuppelten Stellung aufweist.

7. Schnellverschlusskupplung nach Anspruch 5, dadurch gekennzeichnet, dass der Verriegelungsnocken (43) für die Sperrkugelverriegelung (43–48) des ein- und ausrückbaren Anschlags (30) an der gemeinsamen Schiebehülse (35) axialverschieblich gelagert ist und in die Mittelstellung seines Hubes federbeaufschlagt ist.

8. Schnellverschlusskupplung nach Anspruch 7, dadurch gekennzeichnet, dass der Verriegelungsnocken (43) als Ring in einer durch die Ausweichnuten (44, 45) gebildeten Ausnehmung der gemeinsamen Schiebehülse (35) begrenzt axialverschieblich gelagert ist, und dass zwei etwa gleich starke Federn (54, 55) rechts und links von dem ringförmigen Verriegelungsnocken (43) gelagert sind.

9. Schnellverschlusskupplung nach Anspruch 8, dadurch gekennzeichnet, dass der ringförmige Verriegelungsnocken (43) auf seiner Innenseite Anlaufschrägen für die Kugeln (47) aufweist.

10. Schnellverschlusskupplung nach Anspruch 8, dadurch gekennzeichnet, dass die beiden Federn (54, 55) ausserhalb des radialen Bewegungsbereiches der Kugeln (47) angeordnet sind.

**Claims**

1. Quick-action coupling which can also be coupled under pressure, particularly for hydraulic lines, consisting of two coupling halves, which can be inserted one in the other and locked in the coupled position by means of a locking ball interlock (15, 37–41), in the form of a plug valve (1) and a socket valve (2) each having a valve body (10, 27) loaded in the closing direction by a closing spring (11, 31) and held in the closed position in the uncoupled position of the coupling halves and guided in a star body (5, 20) mounted in a coupling body (3, 16), one coupling half (1) of which is provided with a fixed stop (14) limiting the lift (a') of the valve body (10) in its open position, whereas the valve body (27) of the other coupling half (2) can execute a lift (2a or a + a') equal to twice the valve lift (a') of the other valve body (10) and, at the end of the single valve lift (a) a disengageable and engageable stop (30) is provided for release of the double valve lift during coupling or for interlocking this valve body (27) in an open position for operation corresponding to the single valve lift, characterised in that the star body (20) of the coupling half (2) having the double valve lift (2a or a + a') is fixed in a sleeve (19, 23) coaxial with the coupling body (16) and is mounted to be axially displaceable with the sleeve in the coupling body (16) at least in accordance with the single valve lift, and in that another locking ball interlock (43–48), which can be activated from the outside, is provided between the sleeve (19, 23) and the coupling body (16) for disengaging and engaging the stop (30) outside the flow cross-section.

2. Quick-action coupling according to Claim 1, characterised in that the star body (20) or the sleeve (19, 23), which can bear the seat (22) for the valve body (27), is restrained against the coupling body (16) via a compression spring (34) acting in the closed direction of the valve body (27), and in that the compression spring (34) is designed to be stronger than the closing spring (31) of the valve body.

3. Quick-action coupling according to Claim 1, characterised in that the disengageable and engageable stop (30) for the lift of the valve body (27) has an adjusting screw (29) mounted in the star body (20).

4. Quick-action coupling according to Claim 3, characterised in that a common sliding collar (35) for activation of the locking ball interlock (43–48) of the engageable and disengageable stop (30) and of the locking ball interlock (15, 37–41) is provided for the coupling and uncoupling of the two coupling halves (1, 2).

5. Quick-action coupling according to Claim 4, characterised in that the common sliding collar (35) has one interlock cam (37, 43) and, adjoining at least on one side, deflection grooves (38, 44 and/or 39, 45) for the balls (41, 47) of the two locking ball interlocks, the two interlock cams (37, 43) being matched to each other and the interlock cam (43) of the locking ball interlock (43–48) of the disengageable and engageable stop (30) having a comparatively small axially width.

6. Quick-action coupling according to Claim 5, characterised in that the coupling body (16) has one or two markings (51, 52) relative to the sliding collar (35), to indicate the engaged stop (30) and/ or to indicate the coupled position.

7. Quick-action coupling according to Claim 5, characterised in that the interlock cam (43) for the locking ball interlock (43–48) of the engageable and disengageable stop (30) is mounted on the common sliding collar (35) so as to be axially displaceable, and is spring-loaded into the centre position of its lift.

8. Quick-action coupling according to Claim 7, characterised in that the interlock cam (43) is mounted to be axially displaceable to a limited extent as a ring in a recess in the common sliding collar (35) formed by the deflection grooves (44, 45), and in that two, approximately equally strong springs (54, 55) are mounted on the right and left of the annular interlock cam (43).

9. Quick-action coupling according to Claim 8, characterised in that the annular interlock cam (43) has runon bevels on its inside for the balls (47).

10. Quick-action coupling according to Claim 8, characterised in that the two springs (54, 55) are arranged outside the radial area of movement of the balls (47).

## Revendications

1. Raccord rapide, raccordable aussi sous pression, en particulier pour conduites hydrauliques, composé de deux moitiés de raccord pouvant être introduites l'une dans l'autre et verrouillables, en position accouplée, par l'intermédiaire d'un système de verrouillage à billes (15, 37 à 41), ces moitiés de raccord ayant la forme d'une soupape à embout (1) et d'une soupape à manchon (2), comportant chacune un corps de soupape (10, 27) chargé par un ressort de fermeture (11, 31) dans le sens de la fermeture, maintenu, en position désaccouplée des moitiés de raccord, en position de fermeture et guidé dans un corps étoilé (5, 20) logé dans un corps d'accouplement (3, 16), cependant qu'une moitié de raccord (1) comporte une butée fixe (14) limitant la course (a') du corps de soupape (10) dans sa position ouverte, tandis que le corps de soupape (27) de l'autre moitié de raccord (2) peut exécuter une course (2a ou a + a') égale à la double course de soupape (a') de l'autre corps de soupape (10) et qu'à la fin de la course simple de soupape (a) il est prévu une butée (30) pouvant être dégagée et engagée pour libérer la double course de soupape à l'accouplement et/ou pour verrouiller ce corps de soupape (27) dans une position d'ouverture correspondant à la simple course de soupape et destinée au fonctionnement, caractérisé en ce que le corps étoilé (20) de la moitié de raccord (2) comportant la double course de soupape (2a ou a + a') est fixé dans un fourreau ou gaine (19, 23) coaxial au corps d'accouplement (16), qu'il peut coulisser axialement dans ce corps (16), avec ce fourreau au moins de manière correspondant à la course simple de soupape et que, pour l'engagement et le dégagement de la butée (30) à l'extérieur de la section transversale d'écoulement, il est prévu un autre système de verrouillage à billes (43 à 48), qui peut être actionné de l'extérieur et se trouve entre le fourreau ou gaine (19, 23) et le corps d'accouplement (16).

2. Raccord rapide suivant la revendication 1, caractérisé en ce que le corps étoilé (20) et/ou le fourreau (19, 23), qui peut porter le siège (22) pour le corps de soupape (27), s'appuie au corps d'accouplement (16) par l'intermédiaire d'un ressort de compression (34) agissant dans le sens de fermeture du corps de soupape (27) et que le ressort de compression (34) est plus fort que le ressort de fermeture (31) du corps de soupape.

3. Raccord rapide suivant la revendication 1, caractérisé en ce que la butée (30), qui peut être dégagée et engagée pour la course du corps de soupape (27), comporte une vis de réglage (29) logée dans le corps étoilé (20).

4. Raccord rapide suivant la revendication 3, caractérisé en ce qu'un carter coulissant commun (35) est prévu pour l'actionnement du système de verrouillage à billes (43 à 48) de la butée (30), pouvant être engagée et dégagée et du système de verrouillage à billes (15, 37 à 41) pour l'accouplement et le désaccouplement des deux moitiés de raccord (1, 2).

5. Raccord rapide suivant la revendication 4, caractérisé en ce que le carter coulissant commun (35) comporte chaque fois un taquet de verrouillage (37, 43) et, à proximité, au moins sur un côté, des gorges d'échappement (38, 44 et/ou 39, 45) pour les billes (41, 47) des deux systèmes de verrouillage à billes, cependant que les deux taquets de verrouillage (37, 43) sont ajustés l'un sur l'autre et que le taquet de verrouillage (43) du système de verrouillage à billes (43 à 48) de la butée (30), pouvant être dégagée et engagée, présente une largeur axiale relativement faible.

6. Raccord rapide suivant la revendication 5, caractérisé en ce que le corps d'accouplement (16) comporte, par rapport au carter coulissant (35), un ou deux repères (51, 52) indiquant l'engagement de la butée (30) et/ou la position accouplée.

7. Raccord rapide suivant la revendication 5, caractérisé en ce que le taquet de verrouillage (43) pour le système de verrouillage à billes (43 à 48) de la butée (30), pouvant être engagée et dégagée, peut coulisser axialement sur le carter coulissant commun (35) et que dans la position médiane de sa course il est soumis à l'action d'un ressort.

8. Raccord rapide suivant la revendication 7, caractérisé en ce que le taquet de verrouillage (43) est logé, sous forme d'une bague à coulissement axial limité, dans un évidement du carter coulissant commun (35), cet évidement étant formé par les gorges d'échappement (44, 45), et que deux ressorts (54, 55), d'environ la même force, sont logés à droite et à gauche du taquet annulaire de verrouillage (43).

9. Raccord rapide suivant la revendication 8, caractérisé en ce que le taquet annulaire de verrouillage (43) comporte, sur sa face intérieure, des pentes d'accostage pour les billes (47).

10. Raccord rapide suivant la revendication 8, caractérisé en ce que les deux ressorts (54, 55) sont disposés à l'extérieur de la zone radiale de déplacement des billes (47).

Fig.1

Fig.2

Fig. 3

Fig. 4

Fig. 5

Fig. 6

Fig. 7

Fig. 8